# DEMANDE DE BREVET EUROPEEN

(11) **EP 0 579 320 A1**
(43) Date de publication de la demande: **19.01.1994**
(21) Numéro de dépôt: 93202009.2
(22) Date de dépôt: 08.07.1993
(51) Int. Cl.: A01F 25/12, B65D 19/31, B65D 85/20, B65D 19/44

(54) **Dispositif support pour balles de paille**

(30) Priorité: 14.07.1992 GB 9214894
(71) Demandeur: EARLSWOOD INVESTMENTS LIMITED, Douglas, Isle of Man (GB)
(72) Inventeur: Whittingham, David Neville, F-78125 Poigny la Foret (FR)
(74) Mandataire: Bruder, Michel

(57) **Abrégé**

La présente invention concerne un dispositif support destiné à assurer le maintien d'une balle de paille ou de foin de forme notamment cylindrique, à une distance donnée au-dessus du sol, dont la structure comprend deux éléments support parallèles (1b), destinés à recevoir, notamment, deux génératrices de ladite balle, deux éléments de maintien (1a) perpendiculaires aux deux éléments support (1b), et qui sont encastrés dans ceux-ci.

Ce dispositif est caractérisé en ce que les éléments support (1b) et les éléments de maintien (1a) sont constitués de pièces identiques.

## Description

La présente invention concerne un dispositif support destiné à isoler du sol des balles de paille ou de foin.

Après que l'on a réalisé les opérations de fauche du foin, ou après la moisson, on a pour habitude de mettre en balles, de forme généralement cylindrique, le foin coupé, ou la paille, et de laisser ces balles sur le terrain pendant quelque temps afin d'en assurer le séchage.

Malheureusement, lorsque le sol est humide, la partie de ces balles en contact avec ce dernier ne peut sécher, si bien, qu'au bout d'un certain temps, elle se détériore par pourrissement, ce qui rend la balle impropre à une utilisation normale.

On connaît par le brevet GB-A-2.024.152 un dispositif support destiné à être utilisé dans le domaine de l'emballage pour assurer un maintien correct de produits au cours de leur transport. Ce dispositif convient difficilement à l'utilisation ici proposée en raison de ce que d'une part il n'assure le maintien des balles de paille qu'en quatre points de leur génératrice et, d'autre part, il est d'un coût de fabrication relativement élevé puisqu'il fait appel à des éléments constitutifs de structure différente.

La présente invention a pour but de proposer un dispositif support, destiné à maintenir les balles de paille, ou de foin, à une certaine distance du sol, de façon à permettre une bonne aération de leur partie inférieure, ce qui permet d'éviter leur détérioration par pourrissement, et qui soit d'un coût de fabrication particulièrement réduit.

La présente invention a ainsi pour objet un dispositif support destiné à assurer le maintien d'une balle de paille ou de foin de forme notamment cylindrique, à une distance donnée au-dessus du sol, dont la structure comprend deux éléments support parallèles, destinés à recevoir, notamment, deux génératrices de ladite balle, deux éléments de maintien perpendiculaires aux deux éléments support, et qui sont encastrés dans ceux-ci, caractérisé en ce que les éléments support et les éléments de maintien sont constitués de pièces identiques.

Dans une variante de mise en oeuvre de l'invention, chaque élément est pourvu, sur son chant longitudinal opposé à son chant comportant les encoches, d'une échancrure rectangulaire formée de deux flancs opposés et d'un fond, et dont la largeur est sensiblement égale à celle d'un élément, de laquelle on a retranché la profondeur de chaque encoche, et dont la profondeur est au moins égale à l'épaisseur de chaque élément, un cinquième élément, ou élément de rigidification, étant disposé à plat, c'est-à-dire dans une position telle que son plan soit perpendiculaire à la fois au plan des éléments de maintien et à celui des éléments support, de façon telle que chacune des encoches de cet élément de rigidification s'encastre respectivement sur un premier flanc de l'échancrure et que le chant opposé dudit élément de rigidification soit en appui sur le second flanc de l'échancrure.

On remarquera que ce cinquième élément, outre sa fonction de rigidification de la structure, a également pour rôle d'augmenter la surface de base du dispositif ce qui évite l'enfoncement de celui-ci dans le sol lorsque ce dernier, est trop mou.

On décrira ci-après, à titre d'exemple non limitatif, une forme d'exécution de la présente invention, en référence au dessin annexé sur lequel :
La figure 1 est une vue en plan d'un élément constituant le dispositif support suivant l'invention.
La figure 2 est une vue en perspective d'un dispositif support constituant un mode de mise en oeuvre de l'invention constitué d'éléments identiques à celui représenté sur la figure 1.
La figure 3 est une vue en coupe du dispositif représenté sur les figures 1 et 2, suivant la ligne III-III de la figure 2 sur lequel on a disposé une balle de foin.

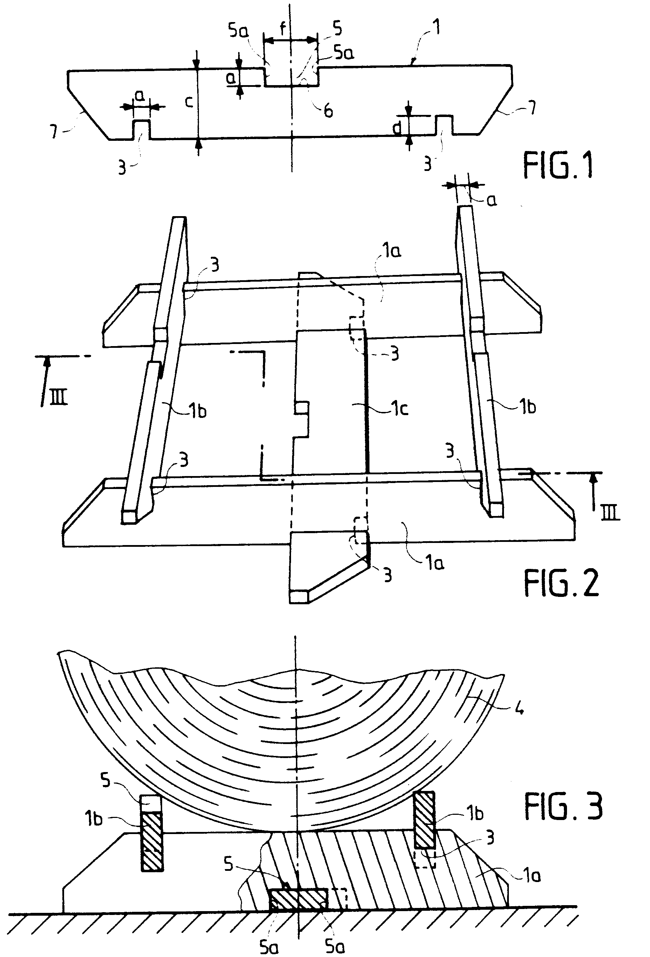

Sur les figures 1 à 3, on a représenté un mode particulier de mise en oeuvre du dispositif support de balles suivant l'invention, dans lequel les cinq pièces constitutives dudit dispositif sont constituées d'éléments 1 identiques.

L'élément 1 est constitué d'un tronçon de profilé, de section transversale rectangulaire, dont le chant inférieur, sur la figure 1, comporte, à proximité de chacune de ses extrémités, une encoche rectangulaire 3 dont la largeur est égale à l'épaisseur a de l'élément 1. L'élément 1 est également pourvu, sur le milieu de son chant supérieur, d'une échancrure rectangulaire 5 ouverte sur l'extérieur et qui comporte deux flancs latéraux opposés 5a et un fond 6. La profondeur de l'échancrure 5 est égale à l'épaisseur a de l'élément 1, et sa largeur f est sensiblement égale à la largeur c de l'élément 1 de laquelle on a retranché la profondeur d de l'encoche 3, si bien que l'on a : f = c - d. Les angles inférieurs de chacun des éléments 1 sont de préférence tronqués et constituent un chant incliné 7.

Comme représenté sur la figure 2, le dispositif support comporte ainsi deux éléments parallèles 1a inférieurs, ou éléments de base, dont les encoches 3 sont orientées vers le haut, et deux éléments supérieurs, ou éléments support 1b, dont les encoches 3 sont orientées vers le bas et s'encastrent dans les encoches 3 correspondantes des éléments de base 1a. On obtient ainsi un dispositif support quadrangulaire qui permet, comme représenté sur la figure 3, de recevoir une balle de foin ou de paille 4, de préférence de forme cylindrique, venant prendre appui sur les éléments support supérieurs 1b de façon que ses génératrices soient parallèles à ces éléments support.

Le dispositif support suivant l'invention est d'un prix de revient particulièrement bas puisque, partant d'un élément profilé, il suffit de réaliser dans celui-ci, outre sa mise à longueur, les encoches 3. De plus, chaque élément peut être réalisé dans un profilé creux, éventuellement nervuré intérieurement, obtenu par extrusion ou par moulage, ce qui permet, outre un coût de fabrication particulièrement attractif, d'en diminuer le poids de façon notable.

On peut, comme représenté sur la figure 2, améliorer la rigidité du dispositif support suivant l'invention en mettant en oeuvre un cinquième élément, ou élément de rigidification 1c. Cet élément est disposé à plat c'est-à-dire que son plan est perpendiculaire aux plans des éléments de base 1a et des éléments support supérieurs 1b. Chacune des deux encoches 3 de l'élément de rigidification 1c, vient s'encastrer sur un premier flanc 5a de l'échancrure 5 d'un élément de base 1 alors que le chant opposé de l'élément de rigidification 1c est en appui sur le second flanc 5a de l'échancrure 5, si bien que l'élément de rigidification 1c peut prendre place dans celle-ci.

De façon à renforcer la rigidité de l'ensemble, on peut donner à l'échancrure 5 une largeur f' légèrement inférieure à la valeur c - d, si bien que l'on joue sur la déformation élastique du matériau pour réaliser un assemblage à force conférant au dispositif une grande rigidité.

## Revendications

1. Dispositif support destiné à assurer le maintien d'une balle de paille ou de foin de forme notamment cylindrique, à une distance donnée au-dessus du sol, dont la structure comprend deux éléments support parallèles (1b), destinés à recevoir, notamment, deux génératrices de ladite balle (4), deux éléments de maintien (1a) perpendiculaires aux deux éléments support (1b), et qui sont encastrés dans ceux-ci, caractérisé en ce que les éléments support (1b) et les éléments de maintien (1a) sont constitués de pièces identiques.

2. Dispositif suivant la revendication 1 caractérisé en ce que chacun de ces éléments est formé d'un profilé de section sensiblement rectangulaire, dont l'un des chants longitudinaux comporte, au voisinage de chacune de ses extrémités, une encoche rectangulaire (3), dont la largeur (a) est au moins égale à l'épaisseur d'un élément (1), lesdits éléments comprenant deux éléments de maintien (1a) parallèles, en appui sur le sol par leurs chants dépourvus d'encoches (3), et deux éléments support supérieurs (1b), perpendiculaires aux deux éléments de maintien (1a), dont les encoches (3) sont orientées vers le bas et sont encastrées dans les encoches (3) des éléments de maintien (1a).

3. Dispositif suivant la revendication 2 caractérisé en ce que chaque élément (1) est pourvu, sur son chant longitudinal opposé à son chant comportant les encoches (3), d'une échancrure rectangulaire (5) formée de deux flancs opposés (5a) et d'un fond (6), et dont la largeur (f) est sensiblement égale à celle d'un élément (1), de laquelle on a retranché la profondeur (d) de chaque encoche (3), et dont la profondeur est au moins égale à l'épaisseur de chaque élément (1), un cinquième élément, ou élément de rigidification (1c), étant disposé à plat, c'est-à-dire dans une position telle que son plan soit perpendiculaire à la fois au plan des éléments de maintien (1a) et à celui des éléments support (1b), de façon telle que chacune des encoches (3) de cet élément de rigidification (1c) s'encastre respectivement sur un premier flanc (5a) de l'échancrure (5) et que le chant opposé dudit élément de rigidification (1c) soit en appui sur le second flanc (5a) de l'échancrure (5).

4. Dispositif suivant la revendication 3, caractérisé en ce que la largeur (f) de l'échancrure (5) est légèrement inférieure à la largeur (c) d'un élément (1) diminuée de la hauteur (d) d'une encoche (3).
